**Europäisches Patentamt**

**European Patent Office**

**Office européen des brevets**

(11) Veröffentlichungsnummer: **0 204 882**

**A1**

(12) # EUROPÄISCHE PATENTANMELDUNG

(21) Anmeldenummer: 86100815.9

(22) Anmeldetag: 22.01.86

(51) Int. Cl.⁴: **F 16 K 11/00**
**E 03 C 1/04**

(30) Priorität: 16.03.85 DE 3509649

(43) Veröffentlichungstag der Anmeldung:
17.12.86 Patentblatt 86/51

(84) Benannte Vertragsstaaten:
AT BE CH DE FR GB IT LI NL SE

(71) Anmelder: IDEAL-STANDARD GMBH
Euskirchener Strasse 80
D-5300 Bonn 1(DE)

(72) Erfinder: Mönch, Heiner, Dipl.-Ing.
in der Neuwies 1
D-5559 Kenn(DE)

(54) **Mischbatterie.**

(57) Die Erfindung sieht eine Mischbatterie, insbesondere eine Einhebelmischbatterie für Spültische od. dgl. vor mit einem Batteriegehäuse (10,4), in dem ein auswechselbares mit einem Anschlußröhrchen (26) für das warme Wasser und einem Anschlußröhrchen (37) für das kalte Wasser versehenes Einsatzstück (12) angeordnet ist, welches mit einer Steuerkartusche für den Mischwasserbetrieb in Verbindung steht, dadurch gekennzeichnet, daß das Einsatzstück (12) gegen ein mit mindestens einem weiteren Anschlußröhrchen (39) für den Anschluß einer Haushaltsmaschine versehenes Einsatzstück (12') auswechselbar ist, an dem oder in dem ein Absperrventil (13) angeordnet ist, dessen Betätigungsorgan (7) am Umfang der Mischbatterie anbringbar ist.

./...

Croydon Printing Company Ltd

Fig 1

Die Erfindung bezieht sich auf eine Mischbatterie, insbesondere Einhebelmischbatterie für Spültische od. dgl. mit einem Batteriegehäuse, in dem ein auswechselbares mit einem Anschlußröhrchen für das warme Wasser und einem Anschlußröhrchen für das kalte Wasser vesehenes Einsatzstück angeordnet ist, welches mit einer Steuerkartusche für den Mischwasserbetrieb in Verbindung steht.

Derartige sogenannte Küchenbatterien sind seit langem bekannt und beliebt. Sie sind häufig mit einem in dem Auslauf gehaltenen und aus diesem herausziehbaren Brauseschlauch versehen. Nachteilig bei diesen Küchenbatterien ist jedoch, daß sie nur für den üblichen Mischwasserbetrieb geeignet sind, d.h., sie weisen kein mit einem weiteren Anschlußröhrchen zusammenwirkendes Absperrventil für den Anschluß einer Haushaltsmaschine auf, z.B. für eine Spül- oder Waschmaschine. Für den Betrieb solcher Haushaltsmaschinen werden entweder separate Ventile, Leitungen und Kupplungsstücke installiert oder die vorhandenen Küchenbatterien werden gegen solche ausgewechselt, die für den Anschluß einer Haushaltsmaschine vorgesehen sind und ein mit einem weiteren Anschlußröhrchen für z.B. Kaltwasser zusammenwirkendes Absperrventil aufweisen. Eine Komplettierung oder Umrüstung der vorhandenen Küchenbatterien ist entweder nicht möglich oder relativ aufwendig und platzraubend.

Der Erfindung liegt die Aufgabe zugrunde, diesen Nachteil zu beseitigen und eine Mischbatterie der eingangs genannten Art zu schaffen, die einfach im Aufbau, leicht umrüstbar und funktionssicher ist.

Erreicht ist dieses Ziel dadurch, daß das Einsatzstück gegen ein mit mindestens einem weiteren Anschlußröhrchen für den Anschluß einer Haushaltsmaschine versehenes Einsatzstück auswechselbar ist, an dem oder in dem ein Absperrventil angeordnet ist, dessen Betätigungsorgan am Umfang der Mischbatterie anbringbar ist.

Bevorzugte Ausführungsformen der Erfindung sind in den Unteransprüchen gekennzeichnet.

In der Zeichnung ist der Erfindungsgegenstand in einem Ausführungsbeispiel dargestellt; und zwar zeigen:

Fig. 1  eine Einhebelmischbatterie mit einem weiteren Anschlußröhrchen nebst Absperrventil im Längsschnitt,

Fig. 2  eine Einhebelmischbatterie im Längsschnitt, die nur für den üblichen Mischwasserbetrieb geeignet ist,

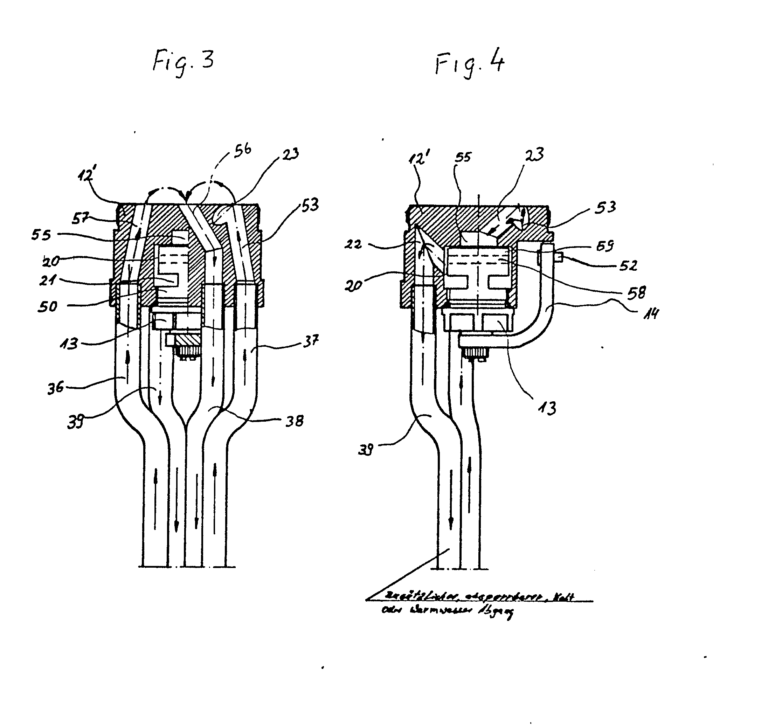

Fig. 3  eine Ansicht des Einsatzstückes gemäß Fig. 1, teilweise im Schnitt und

Fig. 4  eine Ansicht des Einsatzstückes gemäß Fig. 3, teilweise im Schnitt.

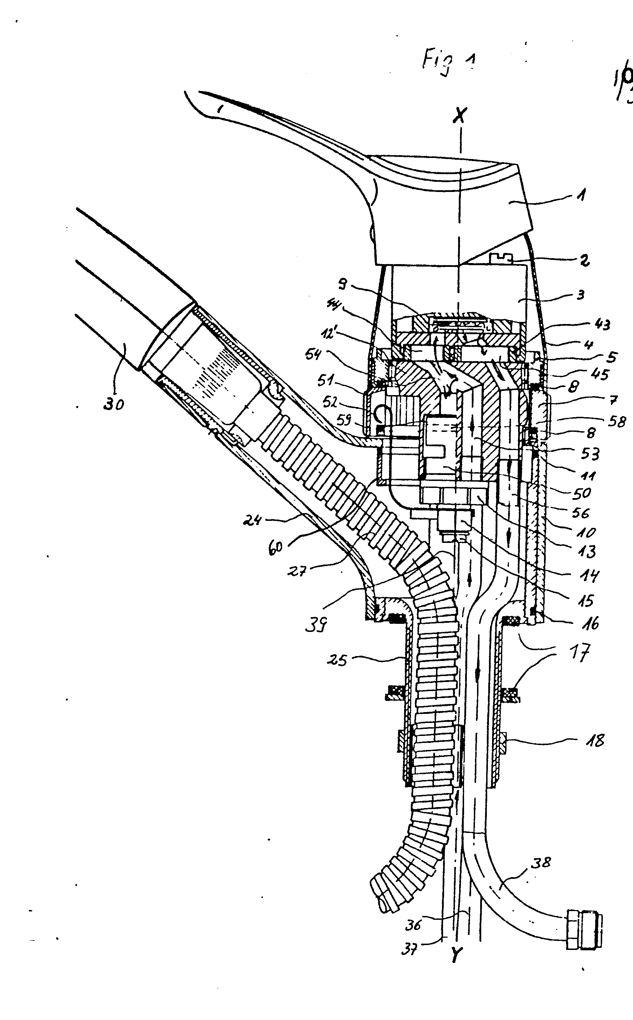

Die umgerüstete Einhebelmischbatterie gemäß der Fig. 1 ist mit einem Griffhebel 1 zur Einstellung der Mischwassermenge und Mischwassertemperatur, insbesondere für einen Spültisch oder dgl. versehen. Der Griffhebel 1 steht mit einer bekannten Steuerkartusche 3, z.B. gemäß der DE-OS 1 550 060 in Verbindung; diese wiederum ist mittels Zylinderschrauben 2, unter Einfügung von statischen Dichtungen 43 für Eingangsöffnungen 44 für das kalte und warme Wasser und einen Mischwasserausgang 45 aus einer Mischkammer 9 auf einem Einsatzstück 12' befestigt. Das Einsatzstück 12' ist in einem Batteriegehäuse (10,4,7) angeordnet und mit einem Anschlußröhrchen 37 für das kalte Wasser, einem Anschlußröhrchen 39 für einen Haushaltsmaschinenanschluß, einem Anschlußröhrchen 36 für das warme Wasser
und einem Anschlußröhrchen 38 für das aus der Mischkammer 9
kommende Wasser ausgestattet. Eine Abdeckkappe 4 für die
Steuerkartusche 3 ist an einem auf dem Einsatzstück 12'
schraubbaren Klemmring 5 gehalten und verdeckt diesen.
Ein Steuerring 7 ist für eine Absperrung oder Freigabe des
zusätzlichen Wasseranschlusses für die Haushaltsmaschine
oder dergl. vorgesehen. Er umschließt oberhalb des einen
Teil des Batteriegehäuses bildenden Auslaufrings 10  das
Einsatzstück 12' und ist zwischen Gleitringen 8 zwischen
dem Klemmring 5 und dem Auslaufring 10 gelagert. Das Einsatzstück 12' ist in einem rohrförmigen, von dem Auslaufring 10 umschlossenen und diesen führenden Innengehäuse 60
gehalten.

In das Einsatzstück 12'ist von unten ein Absperrventil 13
für den zusätzlichen Wasseranschluß dicht eingeschraubt.
Das Absperrventil 13 besteht bekannterweise aus einem
Kartuschengehäuse 50, in dem zwei keramische Dichtscheiben
58 und 59 angeordnet sind. An dem Absperrventil 13 ist ein
Steuerteil 14 mittels einer Halteschraube 15 befestigt;
dieses ein Federblech aufweisende Steuerteil 14 greift mit
seinem Ende 52 in eine Ausnehmung 51 des Steuerringes 7
ein und wird daher beim Verdrehen des Steuerringes 7 betätigt.
Das kalte Wasser gelangt über das Anschlußröhrchen 37 und einen
Zuführkanal 53, der sich in dem Einsatzstück 12'befindet,
zu der entsprechenden Eingangsöffnung 44. Der Zuführkanal
53 hat eine Abzweigung 23, durch die Kaltwasser zu einer
Eingangsöffnung 55 des Absperrventils 13 umgelenkt wird,
von wo es bei geöffnetem Absperrventil über die Austrittsöffnung 21 und eine Abzweigung 22 in das Anschlußröhrchen
39 für die Haushaltsmaschine strömt. Das Anschlußröhrchen 36
für das warme Wasser steht mit dem Zuführkanal 57 und der
entsprechenden anderen Eingangsöffnung 44 in Verbindung.

Die Einloch-Einhebelmischbatterie ist mit einem Einsteckstutzen 25 ausgestattet und wird unter Verwendung von zwei
Gummischeiben 17 mittels der Sicherungsmutter 18 an einem
Spültisch oder dergl. befestigt. An das Anschlußröhrchen 38
ist ein Brauseschlauch 27 angeschlossen. Ein Auslauf 24
dient zur Aufnahme des Brauseschlauches 27 und ist auf einem
Gleitring 11 schwenkbar gelagert. Er wird dabei durch einen
O-Ring 16 zusätzlich geführt. Der Brauseschlauch 27 ist
mittels der Handbrause 30 herausziehbar.

Wie ersichtlich, sind die Steuerkartusche 3, das Einsatzstück 12', das Absperrventil 13 sowie dessen Steuerring 7
koaxial angeordnet.

Schließlich ist der Fig. 1 zu entnehmen, daß das untere
Ende des Einsatzstückes 12' mit dem Absperrventil 13 im
oberen Bereich des durch den Auslaufring 10 gebildeten Teils
des Batteriegehäuses vorgesehen ist, so daß ausreichend
Platz für den Druchtritt der Anschlußröhrchen und des
Brauseschlauches nach unten zur Verfügung steht.

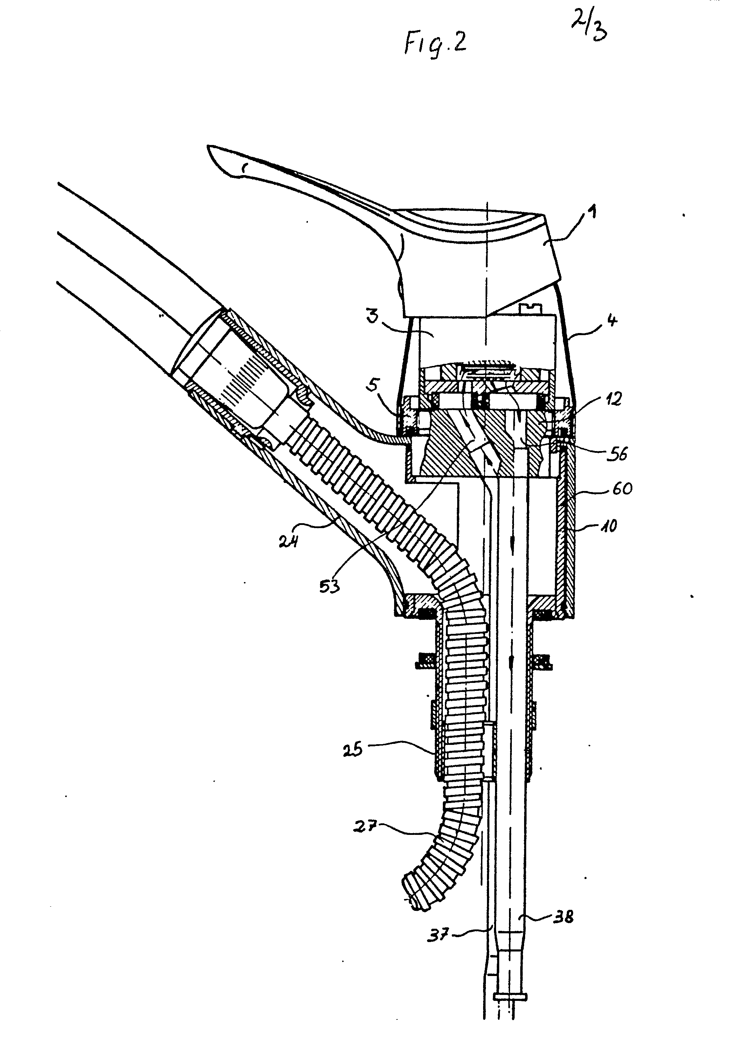

Aus der Fig. 2 ist ersichtlich, daß die Küchenbatterie vor
der Umrüstung mit einem Einsatzstück 12 ausgerüstet gewesen
ist, welches sich nur für einen üblichen Mischbatteriebetrieb eignet. Für die Umrüstung wurden zunächst die Verbindungen zwischen der Kalt- und Warmwasserleitung und den
entsprechenden Anschlußröhrchen sowie zum Brauseschlauch
gelöst. Anschließend wurden der Griffhebel 1, die Abdeckkappe 4, die Steuerkartusche 3 sowie der Klemmring 5 entfernt. Nun wurde das mit dem Innengehäuse 60 lösbar (z.B.
durch Schrauben) verbundene Einsatzstück 12 mit seinen Anschlußröhrchen nach oben herausgezogen. Anschließend wurde .

das neue Einsatzstück 12' mit seinen Anschlußröhrchen,
dem Absperrventil 13 sowie dem Steuerteil 14 mit dem Innengehäuse 60 verbunden, der Steuerring 7 mit dem unteren
Gleitring 8 montiert, der Klemmring 5 mit dem oberen Gleitring 8 auf das Einsatzstück 12' bis gegen den Steuerring 7
geschraubt, die Steuerkartusche montiert und die Abdeckkappe 4 auf den Klemmring 5 gesteckt. Nun wurden die Verbindungen
zwischen der Kalt- und Warmwasserleitung und den entsprechenden Anschlußröhrchen 36,37, zwischen dem Anschlußröhrchen
38 und dem Brauseschlauch 27 sowie zwischen dem weiteren
Kaltwasseranschlußröhrchen 39 und einer Haushaltsmaschine
hergestellt.

Wie bereits erwähnt, ist die dargestellte und beschriebene
Ausführung nur ein Beispiel zur Verwirklichung der Erfindung,
und diese ist nicht darauf beschränkt, vielmehr sind im
Rahmen des erfindungsgemäßen Grundgedankens insbesondere
hinsichtlich der Gestaltung und Anordnung der einzelnen
Teile auch noch andere Möglichkeiten gegeben. So könnte
statt des Steuerringes 7 auch ein Knopf-, ein Wipp- oder
Schiebeschalter Verwendung finden. Das Batteriegehäuse müßte
dann einen entsprechenden Durchbruch aufweisen. Ferner könnte
das Absperrventil 13 auch mit Misch- oder Heißwasser beaufschlagt werden und mit weiteren Anschlußröhrchen in Verbindung stehen. Hierfür sind lediglich die Kanäle im Einsatzstück 12' entsprechend anzuzapfen. Die umgerüstete
Armatur erkennt man lediglich an dem Betätigungsorgan, welches
aber selbst ein  Batteriegehäuseteil    ist und das Aussehen der Mischbatterie kaum verändert.

- Ansprüche -

0204882

Ansprüche

---

1. Mischbatterie, insbesondere Einhebelmischbatterie
   für Spültische od. dgl. mit einem Batteriegehäuse (10,4),
   in dem ein auswechselbares mit einem Anschlußröhrchen
   (36) für das warme Wasser und einem Anschlußröhrchen
   (37) für das kalte Wasser versehenes Einsatzstück (12)
   angeordnet ist, welches mit einer Steuerkartusche für
   den Mischwasserbetrieb in Verbindung steht, dadurch
   gekennzeichnet, daß das Einsatzstück (12) gegen ein
   mit mindestens einem weiteren Anschlußröhrchen (39) für
   den Anschluß einer Haushaltsmaschine versehenes Einsatzstück (12') auswechselbar ist, an dem oder in dem ein
   Absperrventil (13) angeordnet ist, dessen Betätigungsorgan (7) am Umfang der Mischbatterie anbringbar ist.

2. Mischbatterie nach Anspruch 1, dadurch gekennzeichnet,
   daß das Betätigungsorgan von dem Absperrventil (13) örtlich
   getrennt ist.

3. Mischbatterie nach den Ansprüchen 1 und 2, dadurch gekennzeichnet, daß das Betätigungsorgan aus einem Steuerring
   (7) besteht und ein Teil des Batteriegehäuses (10,7,4)
   ist.

4. Mischbatterie nach einem oder mehreren der vorstehenden
   Ansprüche, dadurch gekennzeichnet, daß sie mit einem
   herausziehbaren, in einem Auslauf (24) gehaltenen
   Brauseschlauch (27) versehen ist.

5. Mischbatterie nach einem oder mehreren der vorstehenden
   Ansprüche, dadurch gekennzeichnet, daß ein Steuerteil
   (14) das Absperrventil (13) mit dem Betätigungsorgan (7)
   verbindet und Bestandteil des Einsatzstückes (12') ist.

6. Mischbatterie nach Anspruch 5, dadurch gekennzeichnet, daß das Steuerteil (14) ein Federblech aufweist, dessen eines Ende (52) in eine Ausnehmung (51) des Betätigungsorgans (7) ragt, während sein anderes Ende mit einer Spindel des Absperrventils (13) verbunden ist.

7. Mischbatterie nach einem oder mehreren der vorstehenden Ansprüche, dadurch gekennzeichnet, daß das Einsatzstück (12') auf seiner Unterseite mit dem Absperrventil (13) ausgerüstet ist, und daß auf seiner Oberseite die Steuerkartusche (3) anschließbar ist.

8. Mischbatterie nach einem oder mehreren der vorstehenden Ansprüche dadurch gekennzeichnet, daß das untere Ende des Einsatzstückes (12') mit dem Absperrventil (13) im oberen Bereich des durch einen Auslaufring (10) gebildeten Teils des Batteriegehäuses (10,7,4) vorgesehen ist.

9. Mischbatterie nach Anspruch 8, dadurch gekennzeichnet, daß die Einsatzstücke (12,12') in einem rohrförmigen, von dem Auslaufring (10) umschlossenen und diesen führenden Innengehäuse (60) gehalten sind.

10. Mischbatterie nach einem oder mehreren der vorstehenden Ansprüche, dadurch gekennzeichnet, daß das als Steuerring ausgebildete Betätigungsorgan (7) oberhalb des Auslaufrings (10) im Anschluß an diesen angeordnet ist.

11. Mischbatterie nach Anspruch 10, dadurch gekennzeichnet, daß der Steuerring (7) zwischen dem Auslaufring (10) und einer einen Batteriegehäuseteil bildenden Abdeckkappe (4) angeordnet ist, welche die Steuerkartusche (3) verdeckt.

12. Mischbatterie nach Anspruch 11, dadurch gekennzeichnet, daß der Steuerring (7) zwischen dem Auslaufring (10) und einem an dem Einsatzstück (12') befestigten Ring (5) gelagert ist, der von dem unteren Ende der Abdeckkappe (4) umschlossen ist.

13. Mischbatterie nach Anspruch 12, dadurch gekennzeichnet, daß der Ring (5) auf dem Einsatzstück (12') bis gegen den Steuerring (7) schraubbar ist und gleichzeitig als Klemmring für die Abdeckkappe (4) dient.

14. Mischbatterie nach einem oder mehreren der vorstehenden Ansprüche, dadurch gekennzeichnet, daß das Absperrventil (13), die Einsatzstücke (12,12'), das Innengehäuse (60), die Steuerkartusche (3), der Steuerring (7) und das Batteriegehäuse (10,4,7) koaxial vorgesehen sind.

Fig 1

Fig.2

Fig. 3    Fig. 4

| EINSCHLÄGIGE DOKUMENTE | | EP 86100815.9 | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl 4)** |
| A | DE - A1 - 3 243 750 (TA ROKAL GMBH)<br>  * Seite 6, Zeile 12 - Seite 7, Zeile 20; Fig. 1,3 *<br>  -- | 1 | F 16 K 11/00<br>E 03 C  1/04 |
| A | EP - A1 - 0 071 729 (KLUDI-ARMATU-REN P. SCHAEFFER)<br>  * Seite 4, Zeilen 24-36; Fig. 1-6 *<br>  -- | 1 | |
| A | DE - A1 - 3 022 706 (HANSA METALL-WERKE AG)<br>  * Seite 9, Zeile 10 - Seite 11, Zeile 7; Fig. 1,2 *<br>  ---- | 1,2 | |
| | | | **RECHERCHIERTE SACHGEBIETE (Int. Cl.4)**<br><br>F 16 K 11/00<br>E 03 C  1/00 |

Der vorliegende Recherchenbericht wurde für alle Patentansprüche erstellt.

| Recherchenort | Abschlußdatum der Recherche | Prüfer |
|---|---|---|
| WIEN | 04-09-1986 | ROUSSARIAN |